# DEMANDE DE BREVET EUROPEEN

(11) **EP 4 309 762 A1**
(43) Date de publication de la demande: **24.01.2024**
(21) Numéro de dépôt: 23185027.2
(22) Date de dépôt: 12.07.2023
(51) Int. Cl.: B01D 46/00, B01D 46/30

(54) **SYSTÈME ET PROCÉDÉ DE PURIFICATION DE L AIR**

(30) Priorité: 22.07.2022 FR 2207452
(71) Demandeur: IFP Energies nouvelles, 92500 Rueil-Malmaison (FR)
(72) Inventeur: RICHARD, Florence, 92852 RUEIL-MALMAISON CEDEX (FR); TEIXEIRA, David, 92852 RUEIL-MALMAISON CEDEX (FR)
(74) Mandataire: IFP Energies nouvelles

(57) **Abrégé**

La présente invention concerne un système de purification d'air comprenant des moyens d'aspiration de l'air, un dispositif de filtration du flux d'air issu desdits moyens d'aspiration, et des moyens de distribution du flux d'air filtré issu dudit dispositif de filtration au sein dudit espace, dans lequel ledit dispositif de filtration est traversé par la totalité du flux d'air aspiré et ledit dispositif de filtration comprend au moins un moyen de rétention magnétique comprenant un ou plusieurs aimants et au moins un lit granulaire, ledit moyen de rétention magnétique étant agencé en amont dudit lit granulaire dans le sens de la circulation du flux d'air.

L'invention concerne également un procédé de purification d'air mettant en oeuvre ledit système.

## Description

### Domaine technique

La présente invention concerne le domaine du traitement de l'air, notamment dans des espaces confinés ou semi-confinés, tels qu'une station de transport en commun, notamment dans le cas de réseaux de transports souterrains de type ferrés (par exemple : métro, RER pour « Réseau Express Régional » d'Île-de-France) ou gare routière souterraine.

Dans le cas de réseaux de transports, ces espaces confinés ou semi-confinés incluent les gares, les couloirs, les rames, les tunnels, les locaux commerciaux, les locaux techniques et les centres de dépannage des trains.

De manière générale, ces espaces peuvent être fréquentés par une population de passage, des usagers, et/ou par une population plus ou moins permanente, comme un personnel d'exploitation ou des commerçants.

Les particules présentes dans l'atmosphère ou l'air ambiant peuvent avoir de nombreuses origines et/ou résulter de processus d'évolution complexes faisant intervenir des phénomènes de transport sur de larges échelles et de transformation photochimique notamment. En particulier les particules en suspension dans l'air peuvent provenir également de l'usure des pneumatiques ou des organes de freinage des véhicules, ou tout simplement de la dégradation des revêtements routiers ou ferroviaires (poussières). Leur petite taille, de l'ordre de quelques microns, explique leur maintien en suspension dans l'air. Pour les enceintes ferroviaires souterraines (EFS) les constituants majeurs identifiés sont différents matériaux dont le fer, du carbone élémentaire et du carbone organique. On peut aussi ajouter les poussières terrigènes, notamment composées de silice, liées à l'érosion des sols.

De plus, si les moyens de transport sont entraînés par des moteurs thermiques, la combustion de carburant dans ces moteurs thermiques est une source importante d'émission de particules, telles que les particules fines riches en HAP (hydrocarbures aromatiques polycycliques), mais aussi les particules de suie, les particules métalliques, les particules issues de processus de nucléation à partir de plusieurs types d'espèces chimiques volatiles, ou encore une combinaison de ces différents types de particules. Ces particules peuvent avoir des tailles allant du nanomètre à plusieurs centaines de nanomètres, voire dépasser le micron.

Ces particules, dont les sources sont très nombreuses, présentent une très grande variabilité de taille, allant du nanomètre à plusieurs dizaines de microns, et une très grande variabilité de composition qui peut être organique et/ou inorganique. En particulier, les particules fines représentent l'un des principaux facteurs de risque, liés à la pollution de l'air en milieu urbain, de développer un cancer. Les particules fines peuvent se révéler particulièrement toxiques car elles pénètrent profondément les poumons et l'arbre bronchique.

Dans ces différents lieux confinés ou semi-confinés, sont généralement installés des systèmes de ventilation et d'extraction et/ou d'insufflation d'air, qui ont pour but d'améliorer la qualité de l'air, en le renouvelant par de l'air « frais » insufflé prélevé à l'extérieur et/ou par extraction et rejet à l'extérieur d'air vicié. Dans certains cas, une dépollution de l'air vicié est réalisée dans des installations dites « en dérivation », l'air étant extrait, dépollué, puis réinjecté.

Cependant, ces systèmes s'avèrent insuffisants pour garantir une qualité d'air correcte dans ces lieux confinés. Par exemple, pour les réseaux ferrés de type métro, on vient prélever de l'air extérieur urbain pour renouveler l'air. Or l'air urbain peut déjà présenter un niveau de pollution significatif, notamment en termes de particules fines mais également en termes de polluants gazeux (comme les NOx, les COV, ou les dérivés soufrés comme les oxydes de soufre SOx), notamment du fait du trafic automobile, du chauffage urbain, ou d'activités industrielles proches.

Il existe donc un réel besoin de purifier l'air arrivant dans et/ou extrait de ces espaces confinés ou semi-confinés, pour améliorer la qualité de l'air dans ces espaces, et/ou l'air dans leur voisinage.

### Technique antérieure

Plusieurs technologies ont été développées pour traiter l'air de ces espaces confinés ou semi-confinés.

La demande de brevet FR 3117375 (WO2022/122463) concerne un dispositif et procédé pour dépolluer l'air de milieux confinés ou semi-confinés au moyen d'un filtre TFP ("Turbulent Flow Precipitator" en anglais, et "Précipitateur à Flux Turbulent" en français) amélioré. Un tel système nécessite de créer des turbulences dans le flux gazeux, et des moyens pour piéger les particules. Dans le système, le flux d'air circule parallèlement au filtre, par conséquent, la filtration n'est pas maximale. De plus, cette demande de brevet ne prévoit pas d'agencement spécifique du système de captage des particules dans une station souterraine de transport en commun.

La demande de brevet FR3046663 concerne un procédé de collecte des particules fines générées lors du freinage d'un train. Le procédé comprend des étapes d'aspiration, de purification, et de distribution de l'air filtré. Ce document prévoit la mise en oeuvre d'un filtre HEPA (filtre à air à haute efficacité de l'anglais « high-efficiency particulate air »). Toutefois, un tel filtre nécessite une installation spécifique au sein de la station souterraine de transport, alors que l'espace est limité. Par exemple, l'installation peut entraver le déplacement des utilisateurs sur le quai, ce qui a un impact sur la sécurité et sur la fluidité des transports. Par ailleurs, une fois le filtre encrassé, il ne peut être réutilisé et doit être remplacé.

### Résumé de l'invention

L'invention a pour but de filtrer l'air et capter des particules de l'air, notamment dans un espace confiné ou semi-confiné, au moyen d'un système efficace, robuste, économique, et facile à mettre en oeuvre.

Dans ce but, la présente invention concerne un système et un procédé de purification de l'air dans un espace pollué.

L'invention concerne un système de purification d'air comprenant des particules polluantes au sein d'un espace à dépolluer, ledit système comprenant des moyens d'aspiration de l'air présent au sein dudit espace, un dispositif de filtration du flux d'air issu desdits moyens d'aspiration, et des moyens de distribution du flux d'air filtré issu dudit dispositif de filtration au sein dudit espace, dans lequel ledit dispositif de filtration est traversé par la totalité du flux d'air aspiré et ledit dispositif de filtration comprend au moins un moyen de rétention magnétique comprenant un ou plusieurs aimants et au moins un lit granulaire, ledit moyen de rétention magnétique étant agencé en amont dudit lit granulaire dans le sens de la circulation du flux d'air.

Lesdits moyens d'aspiration peuvent comprendre un ventilateur, de préférence un ventilateur tangentiel ou un ventilateur centrifuge.

Ledit moyen de rétention magnétique peut être un filtre aimanté.

Ledit filtre aimanté peut comporter un ensemble d'aimants parallèles et espacés entre eux, disposé dans un plan perpendiculaire au flux d'air dans le dispositif de purification, de préférence sous forme d'une grille.

L'espacement entre les aimants peut être compris entre 1 mm et 10 mm, de préférence entre 2 mm et 6 mm.

Le système peut comprendre au moins un capteur de perte de charge pour déterminer l'encrassement dudit dispositif de filtration.

Ledit lit granulaire peut comprendre une ouverture de vidange gravitaire et/ou une ouverture de remplissage gravitaire.

Ledit lit granulaire peut comprendre des particules solides minérales, organiques, zéolithiques ou métalliques ayant une taille comprise entre 0,5 mm et 5 mm, et une rugosité comprise entre 1 et 100 µm.

Ledit lit granulaire peut avoir une épaisseur comprise entre 1,5 et 10 cm, de préférence entre 2 et 6 cm.

Ledit lit granulaire ou lesdits lits granulaires peut ou peuvent être constitué(s) de particules de tailles variables, décroissantes de l'amont vers l'aval du lit granulaire ou de l'ensemble des lits granulaires, dans le sens de la circulation du flux d'air.

L'invention concerne un procédé de purification de l'air comprenant des particules polluantes au sein d'un espace à dépolluer au moyen d'un système selon l'une quelconque des variantes décrites dans lequel :
- on aspire un flux d'air pollué présent au sein dudit espace ;
- on fait passer la totalité du flux d'air aspiré dans ledit moyen de rétention magnétique comprenant un ou plusieurs aimants pour retenir au moins une partie desdites particules polluantes sur ledit moyen et obtenir un flux d'air traité ;
- on fait passer la totalité dudit flux d'air traité à travers ledit au moins un lit granulaire situé en aval dudit moyen de rétention magnétique dans le sens de la circulation du flux d'air pour retenir dans ledit ou lesdits lit(s) granulaires(s) au moins une partie desdites particules polluantes contenues dans ledit flux d'air traité et obtenir un flux d'air purifié ;
- on distribue ledit flux d'air purifié dans ledit espace.

On peut nettoyer ledit moyen de rétention magnétique comprenant des particules polluantes pour obtenir un moyen de rétention magnétique nettoyé et/ou régénérer ledit au moins un lit granulaire comprenant des particules polluantes pour obtenir un lit granulaire régénéré.

Dans un mode de réalisation, on peut mesurer au moyen d'un capteur la perte de charge dans le moyen de rétention magnétique et/ou le lit granulaire, déterminer une valeur seuil de perte de charge correspondant à l'encrassement, et effectuer le nettoyage et/ou la régénération lorsque la valeur-seuil est atteinte.

Les particules polluantes peuvent être de taille comprise entre 10 nm et 100 µm et peuvent être constituées en tout ou partie de matière organique, silice cristalline, espèces ioniques, carbone élémentaire, fer, cuivre, calcium, zinc, aluminium, autres métaux, seuls ou en mélange.

L'espace à dépolluer peut être un espace confiné ou semi-confiné.

D'autres caractéristiques et avantages du système et du procédé selon l'invention, apparaîtront à la lecture de la description ci-après d'exemples non limitatifs de réalisations, en se référant aux figures annexées et décrites ci-après.

### Liste des figures

La figure 1 illustre schématiquement un système de purification de l'air selon l'invention en vue en coupe.
La figure 2 représente la répartition en nombre de particules par cm³ d'air en fonction de la taille de particules (distribution en nombre) entre l'entrée et la sortie du système de purification d'air selon l'invention utilisé dans l'exemple.
La figure 3 représente la répartition en masse de particules par cm³ d'air en fonction de la taille de particules (distribution en masse) entre l'entrée et la sortie du système de purification d'air selon l'invention utilisé dans l'exemple.

### Description des modes de réalisation

La présente invention concerne un système et un procédé de purification d'air permettant d'éliminer au moins en partie les particules polluantes d'un flux gazeux comprenant majoritairement de l'air, notamment provenant de l'air présent au sein d'un espace pollué, ou au sein d'un espace confiné ou semi-confiné, par exemple d'une station de transport en commun, notamment souterraine, par exemple pour des transports ferroviaires. Par exemple, il peut s'agir d'une station de métro ou de RER (pour « Réseau Express Régional » d'Île-de-France) ou tout transport équivalent.

### Type de particules captées

Par particules, on entend tout corps solide ou liquide de dimension inférieur à 100 µm. Dans le cadre de l'invention les particules polluantes peuvent éventuellement contenir une phase volatile (par exemple de type d'hydrocarbures) pouvant être adsorbée sur une phase solide. De manière non limitative, les particules selon l'invention peuvent correspondre à des particules de suie qui sont des particules fines riches en HAP (hydrocarbures aromatiques polycycliques), mais aussi des particules provenant de l'abrasion de pièces comme des particules métalliques issues de plaquettes de frein, des rails, des particules provenant de l'abrasion de pneus, mais aussi des pollens, des particules PM₁₀, qui regroupent les particules de diamètre inférieur à 10 µm, qui provoquent une altération de la santé respiratoire, des particules fines PM_{2,5} (particules de diamètre inférieur ou égal à 2,5 µm, constituées d'un mélange de différents composés chimiques, émises principalement lors des phénomènes de combustion ou formées par réactions chimiques à partir de gaz précurseurs présents dans l'atmosphère) qui altèrent en plus la santé cardio-vasculaire, voire des particules très fines PM₁ (particules de diamètre inférieur ou égal à 1 µm).

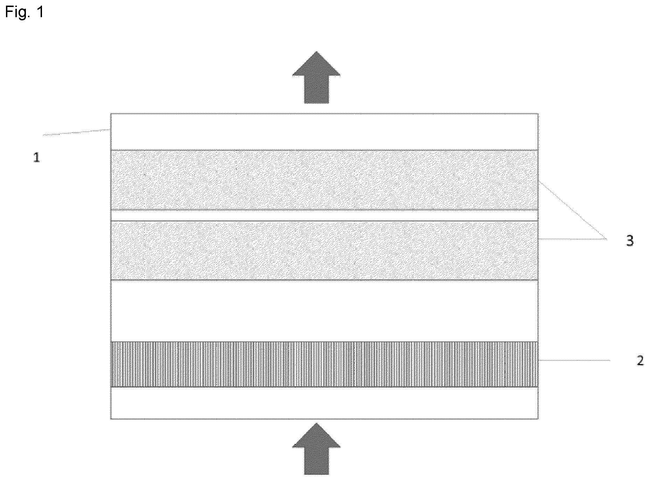

Les tailles de particules en suspension vont de quelques nanomètres à plusieurs µm, mais la plupart des données relatives à la qualité de l'air portent plus particulièrement sur les particules de taille PM₁₀ et PM_{2,5}. Historiquement, ce sont en effet les deux métriques de référence pour la qualité de l'air, comme dans le rapport ANSES, Figure 1 (ANSES, 2015), qui vise ces particules et étudie leur toxicité.

Les différentes sources d'émission vont produire en différentes proportions des particules polluantes métalliques, notamment fer métal et oxydes de fer (hématite Fe₂O₃ et magnétite Fe₃O₄), des particules polluantes minérales, notamment silice cristalline (sable) et des particules polluantes organiques : Hydrocarbures Aromatiques Polycycliques (HAP), composés organiques volatils (COV), composés carbonylés, carbone suie (BC, Black Carbon selon la dénomination anglaise), carbone élémentaire (EC), carbone organique (OC), oxydes d'azote (Nox) et monoxyde de carbone (CO).

Plus particulièrement, les éléments émis en extérieur ou en espace semi-confiné ou confiné comme une gare souterraine appartiennent majoritairement aux catégories suivantes :
- Matière organique,
- Espèces ioniques,
- Carbone élémentaire,
- Fer,
- Cuivre,
- Calcium,
- Zinc,
- Aluminium,
- Autres métaux.

Par « particules polluantes » au sens de l'invention on désigne donc les particules de taille comprise entre 10 nm et 100 µm dont la nature appartient aux catégories suivantes :
- Matière organique,
- Silice cristalline,
- Espèces ioniques,
- Carbone élémentaire,
- Fer,
- Cuivre,
- Calcium,
- Zinc,
- Aluminium,
- Autres métaux.

Le système de purification d'air selon l'invention permet de retenir des particules de taille et de nature différentes, notamment des particules micrométriques (PM₁, PM_{2,5} et PM₁₀) visées pour la qualité de l'air.

Le système de purification comprend des moyens d'aspiration, un moyen de rétention magnétique des particules par aimantation, un moyen de filtration sur lit granulaire, et des moyens de distribution de l'air filtré.

La figure 1 illustre, schématiquement et de manière non limitative, le dispositif de filtration 1 du système de purification de l'air selon un mode de réalisation de l'invention. La figure 1 est une vue en coupe. Les moyens d'aspiration d'air et de distribution ne sont pas représentés. Seul le flux d'air est matérialisé par des flèches, dans le sens de circulation du flux.

Le dispositif de filtration 1 comprend un filtre aimanté 2 (appelé aussi moyen de rétention magnétique), situé en amont des lits granulaires (deux lits granulaires de même épaisseur dans cet exemple), dans le sens de circulation du flux d'air. L'ensemble filtre aimanté 2 et lits granulaires 3 forme le dispositif de filtration 1.

Pour ce mode de réalisation, sur la figure 1, l'air circule dans le moyen d'aspiration, et entre par le bas (selon le plan de la figure) du dispositif de filtration dans le filtre aimanté 2, puis dans les lits granulaires 3, et ressort en haut (selon le plan de la figure) du dispositif de filtration, filtré par les moyens de distribution.

Comme il va de soi, l'invention ne se limite pas aux seules formes de réalisation décrites ci-dessus à titre d'exemple, elle embrasse au contraire toutes les variantes de réalisation.

Le dispositif de filtration du système de purification d'air selon l'invention comprend au moins un moyen de rétention magnétique et au moins un moyen de filtration sur lit granulaire. La combinaison des moyens de rétention magnétique et le moyen de filtration sur lit granulaire permet de former un système de purification d'air efficace, robuste, économique, et facile à mettre en oeuvre.

Avantageusement, ledit moyen de rétention magnétique comprend des aimants qui peuvent être des aimants permanents ou des électroaimants.

Les aimants peuvent être disposés en quinconce ou en rangées de même nombre d'aimants.

Selon une option de réalisation, le moyen de rétention magnétique peut être un filtre aimanté qui peut comporter un ensemble d'aimants parallèles et espacés entre eux. Cet ensemble d'aimants étant disposé dans un plan perpendiculaire au flux d'air dans le dispositif de filtration. Cet ensemble d'aimants peut être formé par exemple par des tiges ou des plaques aimantées reliées, formant ainsi une grille. Cette grille peut être montée dans une glissière, permettant son extraction du dispositif de filtration pour son nettoyage.

Selon une variante de réalisation, l'espacement entre les aimants peut être compris entre 1 mm et 10 mm, de préférence entre 2 mm et 6 mm. Ces gammes de valeur permettent un captage des particules ferromagnétiques, sans impacter de manière trop importante les pertes de charge.

Ce moyen de rétention magnétique permet notamment de filtrer les particules ferreuses magnétiques, par exemple celles issues de l'usure des freins ou des rails. Ces particules peuvent être de dimensions supérieures aux dimensions des particules filtrées par le lit granulaire, mais également de forme différente. En effet, des agglomérats de particules ferreuses magnétiques peuvent se former. A cet effet, le moyen de rétention magnétique, par exemple le filtre aimanté, est agencé en amont du lit de particules dans la direction du flux d'air, le dispositif de purification étant configuré pour que la totalité du flux d'air traverse le filtre aimanté.

Le moyen de filtration sur lit granulaire comprend au moins un lit granulaire. Dans le cas où plusieurs lits granulaires sont présents, l'épaisseur des lits peut être identique, ou différente.

De même, la taille des billes formant un lit granulaire peut être identique au sein d'un même lit. La taille des billes peut être identique dans l'ensemble des lits. La taille des billes peut être variable au sein d'un même lit. La taille des billes peut être différente dans chacun des lits.

Dans un mode de réalisation, on peut utiliser des billes de taille variable, notamment de taille décroissante de l'amont vers l'aval du lit granulaire, dans le sens de circulation du flux d'air.

Dans un autre mode de réalisation on peut utiliser des lits granulaires avec des tailles de billes différentes, la taille de billes des lits étant décroissante de l'amont vers l'aval de l'ensemble des lits granulaires, dans le sens de circulation du flux d'air.

Dans une variante, ces modes de réalisation peuvent être combinés, la taille moyenne de billes du lit aval étant inférieure à la taille moyenne de billes du lit amont, dans le sens de circulation du flux d'air.

La configuration de taille décroissante de billes de ces deux modes de réalisation permet de filtrer l'air avec des billes de moins en moins grosses dans le sens de circulation du flux d'air afin de capter les plus petites particules à la fin.

De plus, le moyen de filtration sur lit granulaire et/ou le moyen de rétention magnétique des particules par aimantation peuvent être intégrés dans une infrastructure existante (par exemple un mur, ou un support de portes ou une structure s'intégrant dans l'architecture du lieu à dépolluer). La filtration ou rétention par aimantation permet d'éliminer en priorité les particules aimantables (fer notamment) tandis que la filtration par lit granulaire permet une filtration robuste et efficace des autres particules.

L'invention concerne également un procédé de filtration comprenant les étapes suivantes :
- Aspiration de l'air pollué chargé en particules polluantes depuis l'espace à dépolluer ;
- Traitement de l'air pollué dans un premier moyen de rétention qui retient par aimantation les particules polluantes aimantables (notamment les particules comprenant du fer) ;
- Filtration de l'air issu de l'étape de traitement par aimantation, par passage dans un deuxième moyen de filtration comprenant au moins un lit granulaire pour obtenir un air filtré appauvri en particules polluantes ;
- On distribue l'air filtré à l'étape précédente vers l'extérieur du dispositif, par exemple dans l'espace confiné ou semi-confiné, de préférence dans une zone distante de la zone d'aspiration afin de ne pas retraiter immédiatement un air purifié au détriment d'une zone plus polluée.

Le flux d'air aspiré traverse en totalité le premier moyen de rétention magnétique, puis le deuxième moyen de filtration sur lit granulaire. De préférence, le passage du flux d'air aspiré est forcé dans le moyen de rétention magnétique, puis dans le moyen de filtration sur lit granulaire.

Sans vouloir être lié par une quelconque théorie, la captation des particules polluantes par le système de purification dépend en grande partie pour les particules polluantes de taille nanométrique et micrométrique de trois phénomènes : la diffusion pour les plus petites jusqu'à 100 nanomètres, l'interception et l'impaction prenant le relais pour des particules s'approchant du micromètre.

Le procédé de purification selon l'invention met en oeuvre un système de purification d'air qui comporte au moins :
- Des moyens d'aspiration de l'air présent dans l'espace à dépolluer, par exemple l'air pollué d'une station de transport,
- Un moyen de rétention magnétique des particules métalliques aimantables connecté aux moyens d'aspiration,
- Un moyen de filtration sur lit granulaire connecté à la sortie du moyen de rétention magnétique, pour filtrer les particules contenues dans l'air aspiré et traité dans le moyen de rétention, et
- Des moyens de distribution de l'air filtré issu du dispositif de filtration, pour distribuer l'air propre purifié au sein de l'espace dépollué.

Dans la présente demande, on appelle « flux d'air » l'air circulant dans le système de purification d'air. Le flux d'air peut être l'air pollué chargé de particules polluantes, s'il est considéré avant le système de purification d'air au niveau des moyens d'aspiration, le flux d'air peut être l'air traité qui sort du moyen de rétention magnétique, et le flux d'air peut être l'air filtré, s'il est considéré après le dispositif de filtration, également appelé « air purifié ».

De plus, dans la présente demande, les termes « avant », « après », ou « amont », « aval », ou « entrée », « sortie » sont considérés dans le sens de circulation du flux d'air, c'est-à-dire depuis les moyens d'aspiration vers les moyens de distribution.

En outre, en fonction de la disposition relative de ces composants, le système de purification peut comporter des conduites de transport du flux d'air pour transporter l'air d'un composant à un autre.

Selon l'invention, le dispositif de filtration comprend au moins un moyen de rétention magnétique par aimantation et au moins un lit granulaire.

Le dispositif de filtration comprend donc en premier lieu un moyen de rétention magnétique, par exemple un filtre aimanté.

Avantageusement, ledit moyen de rétention magnétique comprend des aimants qui peuvent être des aimants permanents ou des électroaimants.

Les aimants peuvent être disposés en quinconce ou en rangées de même nombre d'aimants.

Selon une option de réalisation, le filtre aimanté peut comporter un ensemble d'aimants parallèles et espacés entre eux. Cet ensemble d'aimants étant disposé dans un plan perpendiculaire au flux d'air dans le dispositif de filtration. Cet ensemble d'aimants peut être formé par exemple par des tiges ou des plaques aimantées reliées, formant ainsi une grille. Cette grille peut être montée dans une glissière, permettant son extraction du dispositif de filtration pour son nettoyage.

Selon une variante de réalisation, l'espacement entre les aimants peut être compris entre 1 mm et 10 mm, de préférence entre 2 mm et 6 mm. Ces gammes de valeur permettent un captage des particules ferromagnétiques, sans impacter de manière trop importante les pertes de charge.

Ce moyen de rétention magnétique permet notamment de filtrer les particules ferreuses magnétiques, par exemple celles issues de l'usure des freins ou des rails. Ces particules peuvent être de dimensions supérieures aux dimensions des particules filtrées par le lit granulaire, mais également de forme différente. En effet, des agglomérats de particules ferreuses magnétiques peuvent se former. Le moyen de rétention magnétique, par exemple le filtre aimanté, est agencé en amont du lit de particules dans la direction du flux d'air, le dispositif de purification étant configuré pour que la totalité du flux d'air traverse le filtre aimanté.

Le lit granulaire est formé de particules solides (ou grains). Pour distinguer, dans la présente demande, les particules de l'air à capter, des particules du lit granulaire, le terme « particules polluantes » est associé aux particules de l'air à capter, et les termes « particules solides » et « grains » sont associés au lit granulaire. Le lit granulaire est configuré de telle sorte que la totalité du flux d'air traverse le lit granulaire. En d'autres termes, le flux d'air est forcé dans le lit granulaire. Un tel lit granulaire permet une filtration efficace et robuste des particules polluantes, notamment des particules de petites dimensions, typiquement jusqu'à des diamètres équivalents minimaux allant de 10 nm à 1 µm, de préférence de 200 nm à 1 µm. En outre, le lit granulaire permet une adaptation de la forme et de l'encombrement du dispositif de filtration, ce qui facilite son implémentation, en particulier dans les espaces restreints.

En outre, le dispositif de purification complet peut être intégré dans une structure existante, par exemple un abribus ou une structure de station souterraine. On appelle structure de la station souterraine, un élément préexistant (avant l'installation du système de purification d'air) qui sert au fonctionnement ou la rigidité de la station souterraine. Il peut s'agir notamment d'un mur, d'un support de portes palières, d'un support de voûte, ou tout élément analogue. Cette installation spécifique est permise notamment par la nature du dispositif de filtration (lit granulaire et aimants).

Selon un mode de réalisation, le lit granulaire peut être formé de particules solides (ou de grains) de taille comprise entre 0,5 mm et 5 mm, de préférence entre 0,5 mm et 2 mm, et de manière préférée entre 0,5 mm et 1,8 mm. Ces gammes de valeur permettent une filtration efficace des particules les plus fines, par exemple des particules ayant une taille comprise entre une centaine de nanomètres et une dizaine de microns. Au sein du lit granulaire, les grains peuvent avoir des diamètres similaires ou des diamètres différents. De plus, le lit granulaire peut comprendre plusieurs couches, chaque couche comprenant un diamètre de grains spécifique. Pour ce mode de réalisation, les couches peuvent être agencées dans le flux d'air de telle sorte que le flux d'air traverse les couches par ordre décroissant des diamètres de grains.

De manière avantageuse, les grains peuvent présenter une rugosité de surface élevée, c'est-à-dire une rugosité de surface des grains comprise entre 1 µm et 100 µm. En effet, ces rugosités favorisent l'attraction des particules, par exemple des particules ayant une taille comprise entre une dizaine de nanomètres et une dizaine de micromètres.

Conformément à une mise en oeuvre de l'invention, les grains peuvent être poreux. Cette porosité peut favoriser la retenue des polluants dans le lit granulaire. La porosité adimensionnelle exprimée en volume de vide par rapport au volume poreux total est avantageusement comprise entre 50 et 70%. Par exemple, pour un matériau de type alumine, le volume poreux total (c'est-à-dire le volume de vide à l'intérieur des grains par gramme de grain) peut être compris entre 0,05 cm³/g et 1,5 cm³/g. Ce volume poreux permet la retenue de particules polluantes dans les grains du lit granulaire, notamment par adsorption dans les pores du grain. En variante, les grains peuvent être non poreux.

Selon une mise en oeuvre, les grains constituant le lit granulaire peuvent être d'origine minérale, organique, zéolithique ou métallique. Avantageusement, on peut utiliser des particules d'oxydes minéraux (tels que des alumines, des silices, du titane) ou des produits d'origine naturelle issus d'opérations de broyage et tamisage (comme du sable, de la zéolithe naturelle, de la pouzzolane, des diatomées, etc.) pour constituer le lit granulaire. On peut également envisager des produits métalliques comme des billes d'acier, du verre ou encore des produits organiques tels que des résines polymériques. Les grains peuvent également être des billes de support de catalyseur.

Selon une option de réalisation, le lit granulaire peut avoir une épaisseur comprise entre 1,5 et 10 cm, de préférence entre 2 et 5 cm. En d'autres termes, le flux d'air traverse l'épaisseur du lit granulaire, qui a une dimension comprise entre 1,5 et 10 cm, après avoir traversé le moyen de rétention magnétique. Ainsi, le lit granulaire est peu épais, favorisant ainsi son intégration dans une structure existante. On peut néanmoins envisager un lit granulaire plus épais. Toutefois, dans ce cas, les pertes de charges sont plus importantes, et l'encombrement devient plus important.

Le milieu granulaire peut reposer sur un support sous la forme d'une grille dont la taille des mailles est inférieure à la taille des grains du lit granulaire (de type grille Johnson par exemple).

Selon un mode de réalisation, le lit granulaire peut être disposé à hauteur d'homme. Ainsi, le remplissage et la vidange du lit granulaire peuvent être réalisés facilement. Cette vidange et ce remplissage permettent notamment de sortir les grains pour la régénération du lit granulaire, en particulier lorsque celui-ci est encrassé.

Selon un aspect de l'invention, le lit granulaire peut comprendre une ouverture de vidange gravitaire, de manière à pouvoir assurer une opération de régénération des grains du lit granulaire. De préférence, l'ouverture de vidange peut se situer dans la portion la plus basse du lit granulaire. Alternativement, le lit granulaire peut comprendre une ouverture de vidange par aspiration, de manière à pouvoir assurer une opération de régénération des grains du lit granulaire.

Selon un aspect de l'invention, le lit granulaire peut comprendre une ouverture de remplissage gravitaire, de manière à pouvoir assurer le remplissage pour la première utilisation ou après une opération de régénération des grains du lit gravitaire. De préférence, l'ouverture de remplissage peut se situer dans la portion la plus haute du lit granulaire.

Conformément à une mise en oeuvre de l'invention, le flux d'air peut traverser l'épaisseur du lit granulaire. De préférence, le flux d'air peut traverser l'épaisseur du lit granulaire selon une direction sensiblement horizontale. De cette manière, l'agencement du lit granulaire est simplifié, ce qui facilite son intégration dans une structure de la formation souterraine.

De préférence, le lit granulaire peut être plan comme décrit sur la figure 1, annulaire (tubulaire) ou cylindrique, ou courbe afin de permettre une intégration simplifiée.

Ainsi, avec la mise en oeuvre d'un moyen de rétention magnétique par aimantation en amont du ou des lit(s) granulaires, le dispositif de filtration permet de filtrer dans un premier temps les particules magnétiques, qui peuvent être parmi les plus grosses notamment lorsqu'elles sont agglomérées, grâce au filtre aimanté, et, dans un deuxième temps, les autres particules grâce au(x) lit(s) granulaire(s).

En faisant passer la totalité dudit flux d'air traité à travers ledit au moins un lit granulaire situé en aval dudit moyen de rétention magnétique dans le sens de la circulation du flux d'air, on peut retenir dans le ou lesdits lit(s) granulaires(s) au moins une partie desdites particules polluantes non retenues dans ledit moyen de rétention magnétique et encore contenues dans ledit flux d'air traité.

Ces deux moyens de filtration sont complémentaires pour améliorer le captage des particules polluantes de l'air au sein d'un espace confiné ou semi-confiné pollué, notamment dans une station de transport souterraine. L'association des deux moyens au sein du dispositif de filtration permet le captage de particules polluantes de nature et de taille différentes, ce qui permet d'améliorer la purification de l'air, tout en restant facile à mettre en oeuvre.

Par ailleurs, la mise en oeuvre d'un moyen de rétention des particules magnétiques (par exemple un filtre aimanté) en amont du lit granulaire permet d'éviter que ces particules encrassent plus vite le lit granulaire, ce qui permet d'espacer les étapes de régénération du lit granulaire.

### Régénération et nettoyage

Le système de purification doit pouvoir fonctionner un certain temps d'une manière autonome sans besoin de maintenance, par exemple pendant une durée de quelques jours à plusieurs mois. Pour éviter une baisse trop importante du captage de particules, on peut notamment envisager un fonctionnement autonome sans maintenance de 10 jours à 2 mois, ou de 15 jours à 1 mois pour assurer une maintenance bimensuelle ou mensuelle.

Le système de purification d'air peut être nettoyé ou les parties encrassées peuvent être changées.

La régénération ou le nettoyage peuvent être réalisés in situ ou hors site.

Les aimants peuvent également être extraits du dispositif de filtration pour leur nettoyage. Un système de nettoyage adapté à la forme des aimants est prévu pour pouvoir nettoyer sur site les éléments sans risque de diffusion des particules pendant la manipulation.

Pour le lit granulaire, on peut notamment sortir les billes encrassées et les traiter ailleurs dans un endroit sécurisé où les particules pourront être récupérées. Dans un autre mode de réalisation, le système selon l'invention peut être traité par un système de nettoyage mobile sur site qui permet de faire circuler les billes encrassées dans le système de nettoyage portatif de manière à les réinjecter directement dans le système selon l'invention. L'enlèvement des particules de lit granulaire peut être effectué par soutirage par le bas de la structure, soit par aspiration, soit par simple gravité en fonction de son positionnement par rapport au sol. Son remplissage peut s'effectuer par le haut par gravité.

Pour débarrasser les billes des particules polluantes captées, la régénération peut consister en un simple balayage à l'air à contre-courant ou au solvant ou un lavage à l'eau, par exemple à l'eau légèrement acide (pH 5 ou 6).

De manière avantageuse, le système de purification d'air peut comprendre un ou plusieurs capteurs, notamment un capteur de perte de charge (par exemple par différence de pression), pour déterminer l'encrassement du lit granulaire par les particules polluantes. Ainsi, on peut déterminer quand réaliser une régénération du lit granulaire ou un nettoyage du filtre aimanté. Un capteur peut être situé à l'entrée et à la sortie de chacun des moyens de traitement de l'air : moyen de rétention magnétique ou lit granulaire.

Lorsque la perte de charge entre l'entrée et la sortie de chacun des moyens de traitement de l'air dépasse une valeur-seuil déterminant un encrassement dudit moyen, on peut déclencher une étape de régénération ou nettoyage ou un changement des parties encrassées.

### Mise en oeuvre du système et du procédé selon l'invention

Selon une caractéristique, les moyens d'aspiration de l'air peuvent comprendre un ventilateur, une pompe à vide, une turbine aspirante, ou un compresseur. Par exemple, le ventilateur peut être un ventilateur tangentiel ou un ventilateur centrifuge. Le ventilateur tangentiel présente une forme allongée qui favorise son intégration dans un volume longiligne. Le ventilateur centrifuge a une forme compacte qui favorise son intégration dans un volume restreint.

Selon une mise en oeuvre de l'invention, les moyens de distribution de l'air filtré peuvent comprendre une sortie de l'air filtré, par exemple sous la forme d'une grille d'aération, par exemple sous un abribus ou sur le quai d'une station souterraine. Ainsi, les utilisateurs des moyens de transport en commun peuvent respirer de l'air filtré.

Pour ce premier mode de réalisation, le lit de particules peut s'adapter à la forme du mur, et peut être notamment vertical et/ou courbe.

De manière avantageuse, les moyens de distribution peuvent être situés directement sur le lit granulaire, du côté du lit granulaire dirigé vers la station souterraine. Ainsi, aucune conduite n'est nécessaire entre le dispositif de filtration et les moyens de distribution. Alternativement, les moyens de distribution peuvent être éloignés, et reliés au dispositif de filtration par une conduite.

Selon un exemple, la section de passage du lit granulaire peut être comprise entre 0,3 et 3 m², de préférence entre 0,5 et 1 m². En effet, ces sections de passage permettent de traiter au moins un flux d'air compris entre 2000 et 7500 m³/h, pour traiter une quantité d'air importante au sein de la station souterraine. De plus, la vitesse du débit d'air au sein du dispositif de filtration peut être de l'ordre de 5 m/s. Selon un exemple non limitatif, le lit granulaire peut avoir une hauteur d'environ 1,3 m et une largeur d'environ 0,5 m et une épaisseur de 5 cm. La hauteur de 1,3 m présente en outre l'avantage de rester à hauteur humaine (même s'il est un peu surélevé) pour réaliser de manière simple les opérations de remplissage et de vidange du lit granulaire.

Le dispositif de purification comprend en outre un moyen de rétention magnétique des particules aimantables, sous forme par exemple d'un filtre aimanté agencé en amont du lit granulaire. Pour cela, le filtre aimanté peut comprendre un caisson plan comportant des aimants, le caisson étant agencé entre le mur et le lit granulaire. De préférence, le caisson est peu épais. Pour cette réalisation, le flux d'air traverse successivement les moyens d'aspiration, le caisson du filtre aimanté, le lit granulaire puis les moyens de distribution.

Selon une réalisation de ce premier mode de réalisation, les moyens d'aspiration peuvent être agencés sur le pourtour du plan du dispositif de filtration. Pour cette réalisation, les moyens d'aspiration peuvent comprendre au moins un ventilateur tangentiel. Pour cette réalisation les moyens d'aspiration et le dispositif de filtration sont situés à proximité l'un de l'autre, ce qui simplifie le système de captage.

Alternativement, les moyens d'aspiration peuvent être agencés sur le sol de l'espace confiné ou semi-confiné à dépolluer. Pour cette réalisation, les moyens d'aspiration peuvent comprendre au moins un ventilateur centrifuge. De plus, une conduite peut connecter les moyens d'aspiration du dispositif de filtration. Cette variante permet d'éloigner l'aspiration de la distribution, ce qui permet d'éviter que l'air aspiré provienne de l'air qui vient d'être filtré.

Une variante préférée de ce premier mode de réalisation comporte au moins deux moyens d'aspiration situés de part et d'autre d'un dispositif de filtration, de préférence jusqu'à six moyens d'aspiration. Cette variante préférée assure une répartition homogène du flux d'air dans le dispositif de filtration, en particulier dans le ou les lit(s) granulaire(s).

De manière avantageuse, les moyens de distribution peuvent être situés directement sur le lit granulaire au sein du support, et être dirigé vers l'extérieur du système. Ainsi, aucune conduite n'est nécessaire entre le dispositif de filtration et les moyens de distribution. Alternativement, les moyens de distribution peuvent être éloignés, et reliés au dispositif de filtration par une conduite.

Le filtre aimanté peut comprendre un caisson cylindrique comprenant des aimants, le caisson étant agencé au-dessus du lit granulaire ; le flux d'air traverse successivement les moyens d'aspiration, le caisson du filtre aimanté, le lit granulaire, puis les moyens de distribution.

L'invention concerne également de manière plus générale un procédé de purification d'air pour toutes les applications nécessitant un traitement de l'air, mettant en oeuvre un système de purification de l'air selon l'une quelconque des variantes ou des combinaisons de variantes décrites précédemment.

### Exemple

Des essais ont été réalisés pour montrer l'efficacité du système de purification d'air pollué comprenant des particules polluantes selon l'invention.

Le dispositif de filtration est constitué d'un filtre aimanté en amont d'un filtre bille avec une épaisseur du lit de billes qui est de 5 cm. Les billes sont des billes d'alumine de diamètre 1,8 mm environ.

Pour maintenir les billes d'alumine, des grilles de type Johnson sont utilisées.

Un air pollué représentatif est reconstitué par mélange d'une poudre fine Arizona Dust (particules de taille comprise entre 500 nm et 25 µm) et de particules de fer. La poudre est dispersée dans l'air entrant au moyen de deux disperseurs de particules de type SAG-410L, l'un injectant les particules d'Arizona Dust, le second injectant seulement la poudre de fer magnétique de taille nanométrique.

Les particules de fer ont été caractérisées en DRX et sont des oxydes de fer type magnétite et hématite purs ; la poudre Arizona Dust est principalement constituée de silice et on détecte des traces d'alumino-silicate de type feldspaths qu'il est commun de détecter avec les quartz dans les roches.

Les essais permettent de s'approcher de la concentration en particules polluantes présentes dans l'air dans un milieu pollué comme une gare souterraine et de reproduire un aérosol globalement représentatif en ce qui concerne les différentes granulométries et natures de particules avec une vitesse réaliste par rapport au cas réel.

L'appareil de mesure des particules est le ELPI^{™} (impacteur basse pression à détection électrique ou ou Electrical Low Pressure Impactor, Dekati Ltd. Finland) qui mesure la distribution de taille des particules et la concentration en temps réel.

La mesure de la perte de charge engendrée par la traversée du dispositif de filtration associant filtre formé d'un lit de billes de 5 cm d'épaisseur avec aimant en amont donne une perte de charge de l'ordre de 2860 Pa (28,6 mbar) en début d'essai. La perte de charge due au lit granulaire de billes seul est de l'ordre de 1460 Pa (14,6 mbar).

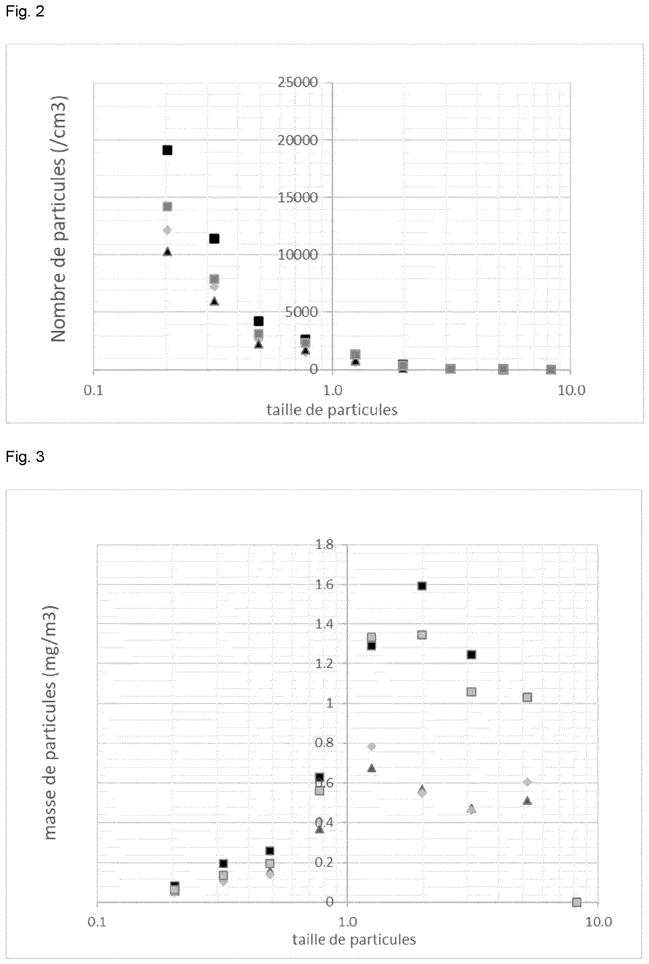

L'ensemble des essais montrent pour la configuration du dispositif de filtration associant filtre formé d'un lit de billes de 5 cm d'épaisseur avec un filtre aimanté en amont, un captage en quelques minutes des particules de 200 nm à 800 nm de l'ordre de 30% et pour les particules supérieures à 1 µm plutôt de l'ordre de 50%. Les courbes permettant d'obtenir ces taux sont données Figure 2 et Figure 3. La masse et le nombre de particules sont mesurés en entrée du dispositif (piquage 1, carrés gris pour le premier essai, carrés noirs pour le deuxième essai) et en sortie du dispositif (piquage 3, losanges gris pour le premier essai, triangles noirs pour le deuxième essai). Pour le cas considéré, avec injection de poudre de fer nanométrique et d'Arizona Dust micrométrique en parallèle, la Figure 2 donne pour deux essais « identiques » la répartition en nombre de particules et la Figure 3 la répartition en masse de particules.

## Revendications

1. Système de purification d'air comprenant des particules polluantes au sein d'un espace à dépolluer, ledit système comprend des moyens d'aspiration de l'air présent au sein dudit espace, un dispositif de filtration du flux d'air issu desdits moyens d'aspiration, et des moyens de distribution du flux d'air filtré issu dudit dispositif de filtration au sein dudit espace, **caractérisé en ce que** ledit dispositif de filtration est traversé par la totalité du flux d'air aspiré et **en ce que** ledit dispositif de filtration comprend au moins un moyen de rétention magnétique comprenant un ou plusieurs aimants et au moins un lit granulaire, ledit moyen de rétention magnétique étant agencé en amont dudit lit granulaire dans le sens de la circulation du flux d'air.

2. Système de purification d'air selon la revendication 1, dans lequel lesdits moyens d'aspiration comprennent un ventilateur, de préférence un ventilateur tangentiel ou un ventilateur centrifuge.

3. Système de purification d'air selon l'une des revendications précédentes dans lequel ledit moyen de rétention magnétique est un filtre aimanté.

4. Système de purification d'air selon la revendication 3 dans lequel ledit filtre aimanté comporte un ensemble d'aimants parallèles et espacés entre eux, disposé dans un plan perpendiculaire au flux d'air dans le dispositif de purification, de préférence sous forme d'une grille.

5. Système de purification d'air selon la revendication 4 dans lequel l'espacement entre les aimants est compris entre 1 mm et 10 mm, de préférence entre 2 mm et 6 mm.

6. Système de purification d'air selon l'une des revendications précédentes comprenant au moins un capteur de perte de charge pour déterminer l'encrassement dudit dispositif de filtration.

7. Système de purification d'air selon l'une des revendications précédentes, dans lequel ledit lit granulaire comprend une ouverture de vidange gravitaire et/ou une ouverture de remplissage gravitaire.

8. Système de purification d'air selon l'une des revendications précédentes, dans lequel ledit lit granulaire comprend des particules solides minérales, organiques, zéolithiques ou métalliques ayant une taille comprise entre 0,5 mm et 5 mm, et une rugosité comprise entre 1 et 100 µm.

9. Système de purification d'air selon l'une des revendications précédentes, dans lequel ledit lit granulaire a une épaisseur comprise entre 1,5 et 10 cm, de préférence entre 2 et 6 cm.

10. Système de purification d'air selon l'une des revendications précédentes, dans lequel ledit lit granulaire ou lesdits lits granulaires est(sont) constitué(s) de particules de tailles variables, décroissantes de l'amont vers l'aval du lit granulaire ou de l'ensemble des lits granulaires, dans le sens de la circulation du flux d'air.

11. Procédé de purification de l'air comprenant des particules polluantes au sein d'un espace à dépolluer au moyen d'un système selon l'une des revendications 1 à 10, dans lequel :
- on aspire un flux d'air pollué présent au sein dudit espace ;
- on fait passer la totalité du flux d'air aspiré dans ledit moyen de rétention magnétique comprenant un ou plusieurs aimants pour retenir au moins une partie desdites particules polluantes sur ledit moyen et obtenir un flux d'air traité ;
- on fait passer la totalité dudit flux d'air traité à travers ledit au moins un lit granulaire situé en aval dudit moyen de rétention magnétique dans le sens de la circulation du flux d'air pour retenir dans ledit ou lesdits lit(s) granulaires(s) au moins une partie desdites particules polluantes contenues dans ledit flux d'air traité et obtenir un flux d'air purifié ;
- on distribue ledit flux d'air purifié dans ledit espace.

12. Procédé de purification de l'air selon la revendication 11 dans lequel on nettoie ledit moyen de rétention magnétique comprenant des particules polluantes pour obtenir un moyen de rétention magnétique nettoyé et/ou on régénère ledit au moins un lit granulaire comprenant des particules polluantes pour obtenir un lit granulaire régénéré.

13. Procédé de purification de l'air selon la revendication 12 dans lequel on mesure au moyen d'un capteur la perte de charge dans le moyen de rétention magnétique et/ou le lit granulaire, on détermine une valeur seuil de perte de charge correspondant à l'encrassement, et on effectue le nettoyage et/ou la régénération lorsque la valeur-seuil est atteinte.

14. Procédé de purification de l'air selon l'une des revendications 11 à 13 dans lequel les particules polluantes sont de taille comprise entre 10 nm et 100 µm et constituées en tout ou partie de matière organique, silice cristalline, espèces ioniques, carbone élémentaire, fer, cuivre, calcium, zinc, aluminium, autres métaux, seuls ou en mélange.

15. Procédé de purification de l'air selon l'une des revendications 11 à 14 dans lequel l'espace à dépolluer est un espace confiné ou semi-confiné pollué.
